# EUROPEAN PATENT APPLICATION

(11) **EP 4 456 369 A1**
(43) Date of publication of application: **30.10.2024**
(21) Application number: 22910830.3
(22) Date of filing: 02.12.2022
(51) Int. Cl.: H02J 7/00, B60L 53/14, B60K 1/04, H01R 13/52

(54) **ELECTRIC WORK VEHICLE**

(30) Priority: 24.12.2021 JP 2021211642
(71) Applicant: Kubota Corporation, Osaka 556-8601 (JP)
(72) Inventor: OKAZAKI, Kazuto, Sakai-shi, Osaka 590-0908 (JP); NISHINAKA, Masaaki, Sakai-shi, Osaka 590-0908 (JP); TAMBA, Daiki, Sakai-shi, Osaka 590-0908 (JP)
(74) Representative: Müller-Boré & Partner Patentanwälte PartG mbB
(86) International application number: PCT/JP2022/044538
(87) International publication number: WO 2023/120113

(57) **Abstract**

An electric work vehicle including: a battery (4); a motor configured to be driven by electric power supplied from the battery (4); a travel device configured to be driven by the motor; and a connector (47) to which a charger (60) is connectable and is electrically connected to the battery (4). The connector (47) includes a connection terminal (50) to which the charger (60) is connectable and a housing (51) that covers the connection terminal (50), and the housing (51) includes a first drain hole (61) in a lower portion thereof.

## Description

### Technical Field

The present invention relates to an electric work vehicle that includes a battery and a motor driven by electric power supplied from the battery.

### Background Art

The electric work vehicle described in Patent Document 1 is already known as an example of the above-described electric work vehicle. This electric work vehicle travels by means of a travel device ("front wheels" and "rear wheels" in Patent Document 1) that is driven by a motor ("electric motor" in Patent Document 1).

### Prior Art Documents

### Patent Documents

Patent Document 1: JP 2013-248918A

### Disclosure of the Invention

### Problem to be Solved by the Invention

Patent Document 1 does not describe a connector to which a charger for charging the battery can be connected. Here, the electric work vehicle described in Patent Document 1 may have a configuration that includes a connector to which a charger is connectable and is electrically connected to a battery, and in which the connector includes a connection terminal to which a charger is connectable and a housing that houses the connection terminal. With this configuration, the connection terminal is protected by the housing.

However, it is envisioned that water may accumulate inside the housing due to, for example, rainwater entering the housing. In such a case, it is necessary to remove the water inside the housing before connecting the charger. As a result, the labor required to operate the electric work vehicle tends to increase.

An object of the present invention is to provide an electric work vehicle capable of reducing the labor required to operate the electric work vehicle.

### Means for Solving Problem

The present invention is characterized by including: a battery; a motor configured to be driven by electric power supplied from the battery; a travel device configured to be driven by the motor; and a connector to which the charger is connectable and is electrically connected to the battery, wherein the connector includes a connection terminal to which the charger is connectable and a housing that covers the connection terminal, and the housing includes a first drain hole in a lower portion thereof.

With the present configuration, even if water enters the housing, the water is discharged to the outside of the housing by gravity from the first drain hole in the lower portion of the housing. This makes it difficult for water to accumulate inside the housing. This will likely eliminate the need to remove water from the housing prior to connecting the charger. Therefore, the labor required to operate the electric work vehicle can be reduced.

Therefore, with the present configuration, it is possible to realize an electric work vehicle capable of reducing the labor required to operate the electric work vehicle.

Furthermore, in the present invention, it is preferable that the electric work vehicle further includes a support member disposed below the housing and supporting the housing, wherein the support member includes a second drain hole, and the second drain hole overlaps the housing in a plan view.

In the present configuration, the second drain hole is located directly below the housing. Therefore, water falling through the first drain hole of the housing is easily discharged through the second drain hole without accumulating on the support member. That is to say, it is easy to avoid a situation in which water falling through the first drain hole of the housing accumulates on the support member.

Furthermore, in the present invention, it is preferable that the electric work vehicle further includes: a cooling device that includes a radiator and a cooling fan configured to cool the radiator, wherein the housing is disposed so as to be adjacent to the cooling device or so as to overlap the cooling device in a plan view.

With the present configuration, water discharged through the first drain hole of the housing is likely to fall to a position near the cooling device. Therefore, the water is easily evaporated by the heat from the radiator and the air from the cooling fan. Therefore, it is easy to avoid a situation in which water falling from the first drain hole of the housing accumulates below the housing.

Furthermore, in the present invention, it is preferable that the housing includes an opening configured to receive the charger, and is oriented with the opening facing diagonally upward, and the first drain hole is located at a position lower than a lower end position of the opening.

With the present configuration, water that has entered the housing through the opening is more likely to be reliably discharged through the first drain hole than in the case where the first drain hole is located at a position higher than the lower end position of the opening. As a result, it is possible to realize an electric work vehicle in which water that has entered the housing through the opening that receives the charger is easily and reliably discharged.

### Brief Description of the Drawings

FIG. 1 is a left side view of a tractor.
FIG. 2 is a left side view showing an arrangement of an inverter and so on.
FIG. 3 is a diagram showing a flow of motive power transmission.
FIG. 4 is a partially cutaway left side view showing a configuration of the connector and so on.
FIG. 5 is a partially cutaway front view showing a configuration of the connector and so on.
FIG. 6 is a plan view showing a configuration of a second drain hole and so on.
FIG. 7 is a partially cutaway front view showing a configuration of a connecting portion and so on according to a first modification.

### Best Mode for Carrying out the Invention

An embodiment of the present invention will be described based on the drawings. In the following description, the direction of an arrow F and the direction of an arrow B in the drawings will be respectively referred to as "the front side" and "the rear side", and the direction of an arrow L and the direction of an arrow R in the drawings will be respectively referred to as "the left side" and "the right side" unless otherwise stated. Also, the direction of an arrow U and the direction of an arrow D in the drawings will be respectively referred to as "the upper side" and "the lower side".

### Overall Configuration of Tractor

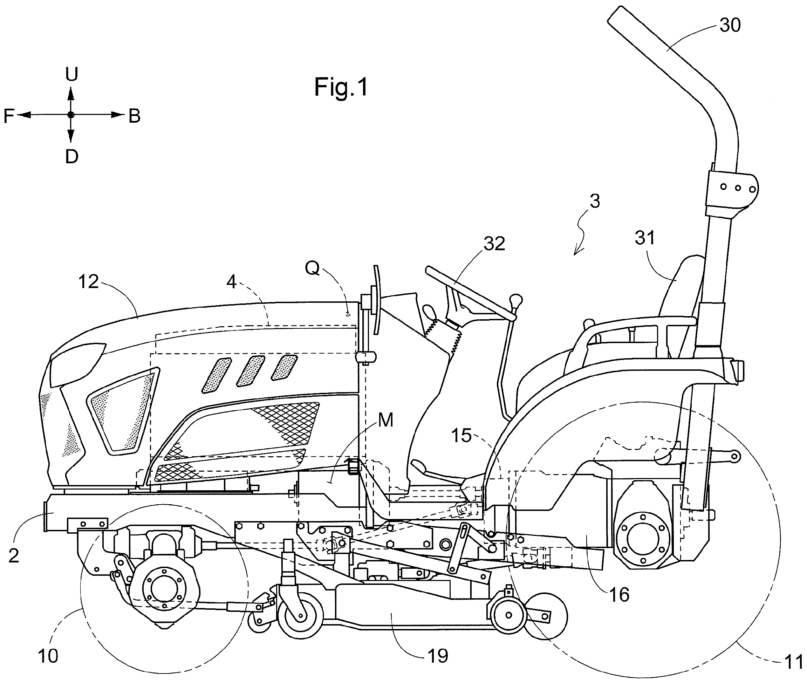

The following describes a tractor according to the present embodiment. As shown in FIG. 1, the tractor includes left and right front wheels 10, left and right rear wheels 11, and a cover member 12.

The tractor also includes a body frame 2 and a driving section 3. The body frame 2 is supported by the left and right front wheels 10 and the left and right rear wheels 11.

The cover member 12 is disposed in a front portion of the body of the tractor. The driving section 3 is behind the cover member 12. In other words, the cover member 12 is in front of the driving section 3.

The driving section 3 includes a protective frame 30, a driver's seat 31, and a steering wheel 32. An operator can sit on the driver's seat 31. Accordingly, the operator can get on the driving section 3. The operator steers the left and right front wheels 10 by operating the steering wheel 32. The operator can perform various driving operations in the driving section 3.

The tractor includes a travel battery 4. The cover member 12 is configured to be pivotable about an opening/closing axis Q extending in the left-right direction of the body. Accordingly, the cover member 12 is configured to be openable and closable. When the cover member 12 is closed, the travel battery 4 is covered by the cover member 12.

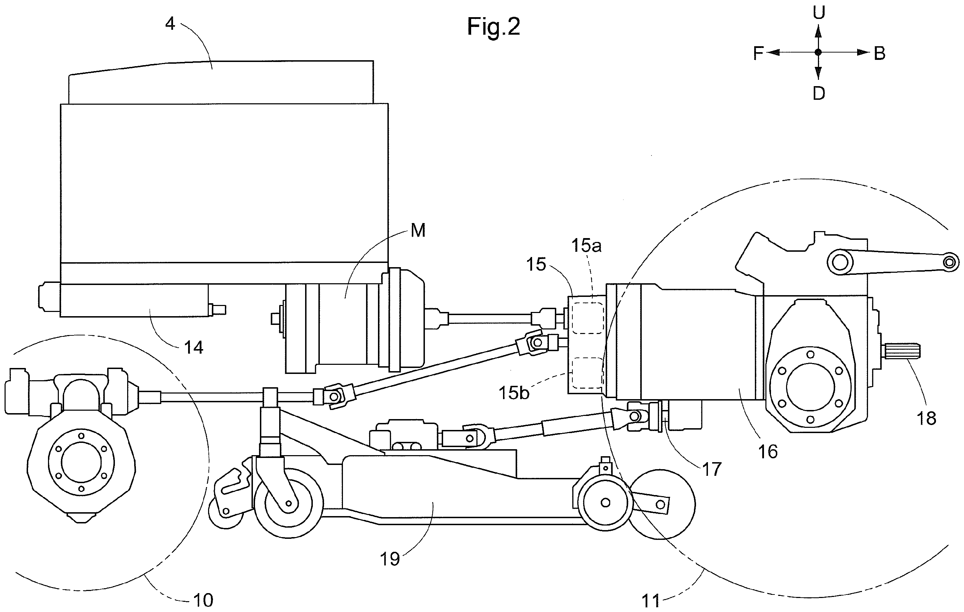

As shown in FIG. 2, the tractor includes an inverter 14 and a motor M. The travel battery 4 supplies power to the inverter 14. The inverter 14 converts DC power supplied from the travel battery 4 to AC power, and supplies the AC power to the motor M. The motor M is driven by the AC power supplied from the inverter 14.

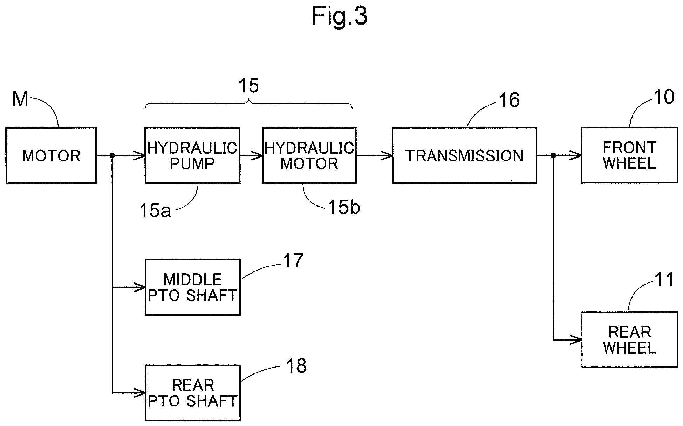

As shown in FIGS. 2 and 3, the tractor includes a hydraulic continuously variable transmission 15 and a transmission 16. As shown in FIG. 3, the hydraulic continuously variable transmission 15 includes a hydraulic pump 15a and a hydraulic motor 15b.

The hydraulic pump 15a is driven by rotational motive power transmitted from the motor M. As a result of the hydraulic pump 15a being driven, rotational motive power is output from the hydraulic motor 15b. The hydraulic continuously variable transmission 15 is configured to change the speed of rotational motive power between the hydraulic pump 15a and the hydraulic motor 15b. Also, the hydraulic continuously variable transmission 15 is configured to be capable of changing the transmission ratio in a stepless manner.

The rotational motive power output from the hydraulic motor 15b is transmitted to the transmission 16. The speed of the rotational motive power transmitted to the transmission 16 is changed by a gear transmission mechanism included in the transmission 16, and the rotational motive power is distributed to the left and right front wheels 10 and the left and right rear wheels 11. Thus, the left and right front wheels 10 and the left and right rear wheels 11 are driven.

As shown in FIGS. 2 and 3, the tractor also includes a middle PTO shaft 17 and a rear PTO shaft 18. Rotational motive power output from the motor M is distributed to the hydraulic pump 15a, the middle PTO shaft 17, and the rear PTO shaft 18. The middle PTO shaft 17 and the rear PTO shaft 18 are rotated by the distributed rotational motive power.

If a work device is connected to the middle PTO shaft 17 or the rear PTO shaft 18, the work device is driven by rotational motive power transmitted by the middle PTO shaft 17 or the rear PTO shaft 18. For example, in the present embodiment, a grass cutting device 19 is connected to the middle PTO shaft 17 as shown in FIG. 2. The grass cutting device 19 is driven by rotational motive power transmitted by the middle PTO shaft 17.

With the above configuration, the tractor according to the present embodiment includes the travel battery 4, the motor M driven by electric power supplied from the travel battery 4, the left and right front wheels 10 and the left and right rear wheels 11 driven by the motor M.

Note that this tractor corresponds to the "electric work vehicle" according to the present invention. The travel battery 4 corresponds to the "battery" according to the present invention. The left and right front wheels 10 and the left and right rear wheels 11 both correspond to the "travel device" according to the present invention.

### Configuration of Front Portion of Body

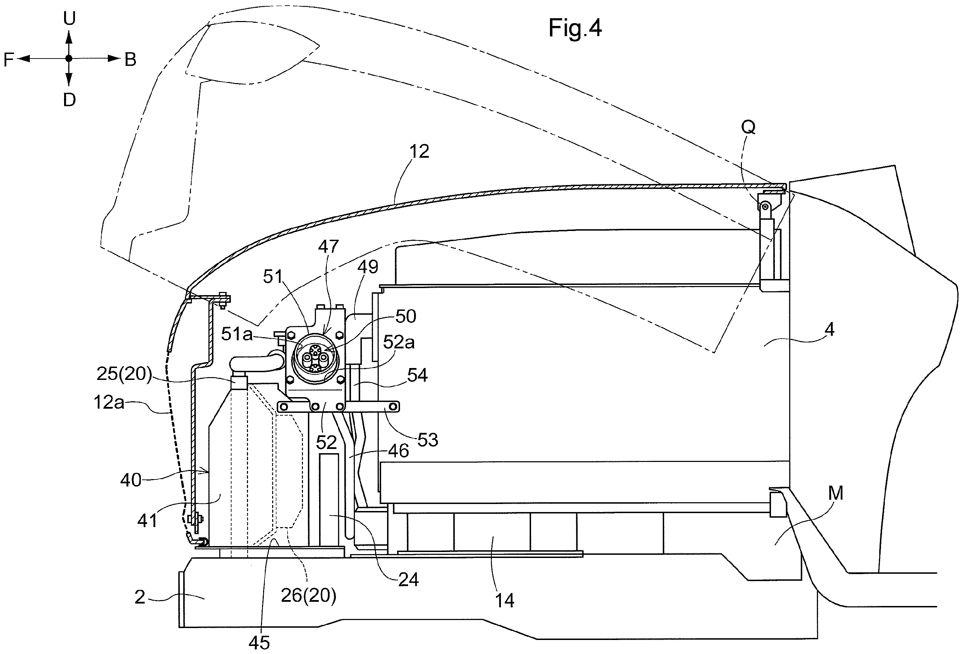

As shown in FIGS. 4 to 6, the tractor according to the present embodiment includes a cooling device 20, a reserve tank 21, an auxiliary equipment battery 22, a voltage converter 23, and an oil cooler 24. When the cover member 12 is closed, the cooling device 20, the reserve tank 21, the auxiliary equipment battery 22, the voltage converter 23 (DC/DC converter), and the oil cooler 24 are covered by the cover member 12.

The cooling device 20 includes a radiator 25 and a cooling fan 26. The radiator 25 and a water pump (not shown) are included in the cooling water path in the tractor. The water pump pumps the cooling water, and the cooling water circulates through this cooling water path. The cooling water is cooled by passing through the radiator 25. The reserve tank 21 can store cooling water.

The cooling fan 26 is disposed rearward of the radiator 25. The cooling fan 26 sends cooling air toward the rear side. This allows outside air to be introduced into the inside of the cover member 12 via an outside air introducing portion 12a provided in a front portion of the cover member 12 and pass through the radiator 25. As a result, the radiator 25 is cooled.

That is to say, the tractor according to the present embodiment includes a cooling device 20 that includes a radiator 25 and a cooling fan 26 that cools the radiator 25.

The auxiliary equipment battery 22 supplies electric power to various auxiliary equipment. Also, electric power is sent from the travel battery 4 to the voltage converter 23. The voltage converter 23 steps down the voltage of the electric power from the travel battery 4 and supplies it to the auxiliary equipment battery 22.

Hydraulic oil for the tractor is cooled by passing through the oil cooler 24.

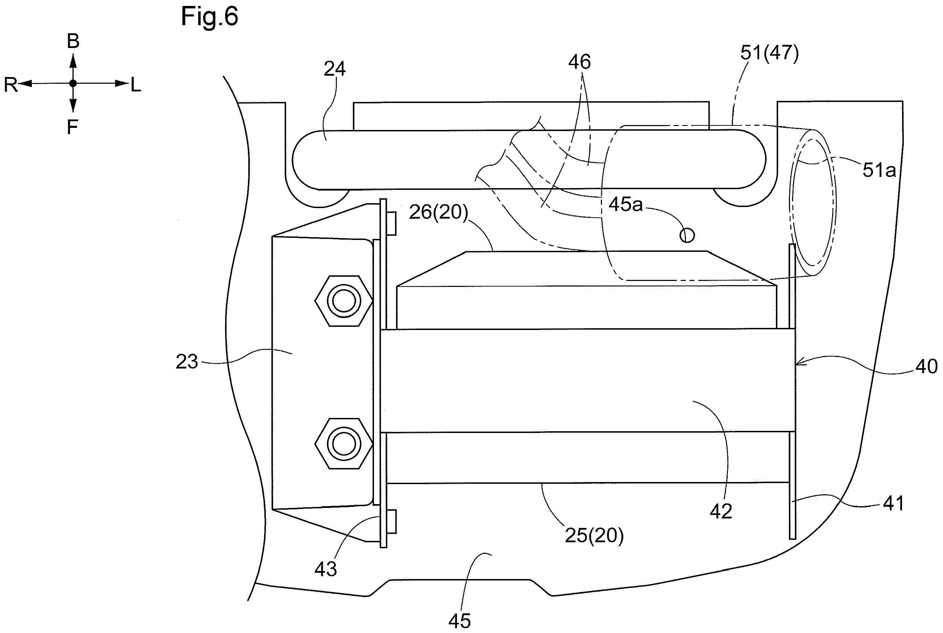

As shown in FIGS. 4 and 6, the cooling device 20 is supported by a support frame 40. The support frame 40 is formed in a gate shape that covers left and right portions and an upper portion of the radiator 25. Specifically, the support frame 40 includes a left plate portion 41, an upper plate portion 42, and a right plate portion 43. Both the left plate portion 41 and the right plate portion 43 are plate-shaped members in a vertical position. The left plate portion 41 is disposed on the left of the right plate portion 43. The upper plate portion 42 is a plate-shaped member in a horizontal position. The upper plate portion 42 is disposed so as to extend between the upper end portion of the left plate portion 41 and the upper end portion of the right plate portion 43. The left plate portion 41 covers the left portion of the radiator 25. The upper plate portion 42 covers the upper portion of the radiator 25. The right plate portion 43 covers the right portion of the radiator 25.

As shown in FIG. 6, the voltage converter 23 is attached to the right plate portion 43 from the right side. Thus, the voltage converter 23 is supported by the support frame 40.

As shown in FIGS. 4 and 6, the support frame 40 is supported by a support member 45 disposed below the support frame 40. The support member 45 is a plate-shaped member in a horizontal position. The support member 45 is supported by the body frame 2.

### Configuration around Connector

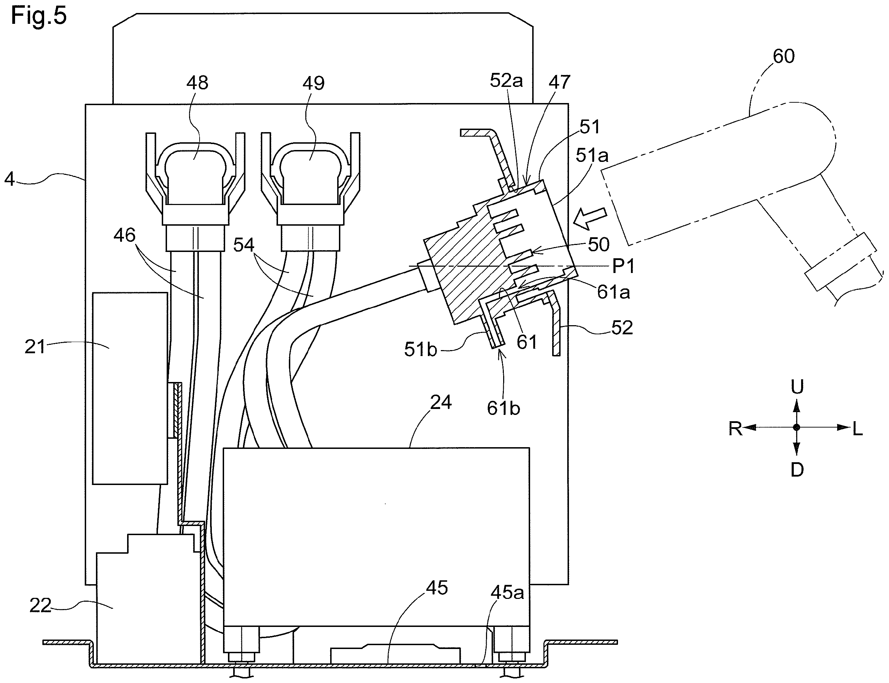

As shown in FIGS. 4 and 5, the tractor according to the present embodiment includes an input harness 46 and a connector 47.

An input unit 48 is disposed on a front side portion of the travel battery 4. The connector 47 is disposed forward of the travel battery 4 so as to be adjacent to the left end portion of the front end portion of the travel battery 4. The input harness 46 electrically connects the connector 47 and the input unit 48.

With this configuration, the connector 47 is electrically connected to the travel battery 4 via the input harness 46 and the input unit 48.

The connector 47 is disposed in a side portion of the body so as to face the side of the body. More specifically, the connector 47 is disposed in a left side portion of the body so as to face the left side of the body. More precisely, the connector 47 is oriented toward the upper left of the body.

As shown in FIGS. 4 and 5, the connector 47 includes a connection terminal 50 and a housing 51. The connection terminal 50 is electrically connected to the travel battery 4 via the input harness 46 and the input unit 48. A charger 60 provided at a charging facility or the like can be connected to the connection terminal 50. Note that the standards of the charger 60 and the connector 47 are not particularly limited, and may be, for example, CHAdeMO.

By connecting the charger 60 to the connection terminal 50, electric power is supplied to the travel battery 4 via the input harness 46 and the input unit 48. Thus, the travel battery 4 is charged.

In this way, the tractor according to the present embodiment includes a connector 47 to which the charger 60 is connectable and that is electrically connected to the travel battery 4.

As shown in FIG. 4, when the cover member 12 is open, the connector 47 does not overlap the cover member 12 in a side view. That is to say, when the cover member 12 is open, the connector 47 is exposed. When the cover member 12 is closed, the connector 47 is covered by the cover member 12. Note that in FIG. 4, the cover member 12 in the open state is indicated by imaginary lines. The cover member 12 in the closed state is indicated by solid lines.

As shown in FIGS. 4 to 6, the housing 51 has a substantially cylindrical shape. The housing 51 is disposed so as to enclose the connection terminal 50. Thus, the housing 51 covers the connection terminal 50.

That is to say, the connector 47 includes a connection terminal 50 to which the charger 60 is connectable and a housing 51 that covers the connection terminal 50.

As shown in FIGS. 4 and 5, the tractor according to the present embodiment includes a bent plate-shaped holding portion 52 and a support stay 53. The housing 51 passes through a mounting opening 52a of the holding portion 52 and is fixed to the holding portion 52 with bolts.

As shown in FIG. 4, the holding portion 52 is fixed to the support stay 53 with bolts. The support stay 53 extends in the front-rear direction. The front end portion of the support stay 53 is fixed to the left plate portion 41 with bolts. The rear end portion of the support stay 53 is fixed to the travel battery 4 with bolts.

With the above-described configuration, the housing 51 is supported by the left plate portion 41 and the travel battery 4 by means of the holding portion 52 and the support stay 53. As a result, the housing 51 is supported by the support member 45 by means of the holding portion 52, the support stay 53, and the left plate portion 41. As shown in FIGS. 4 to 6, the support member 45 is disposed below the housing 51.

In this way, the tractor according to the present embodiment includes a support member 45 that is disposed below the housing 51 and supports the housing 51.

As shown in FIG. 6, the housing 51 is disposed so as to overlap the cooling fan 26 of the cooling device 20 in a plan view. However, the present invention is not limited to such a configuration, and the housing 51 may be disposed adjacent to the cooling device 20 without overlapping the cooling device 20 in a plan view.

In this way, the housing 51 is disposed so as to be adjacent to the cooling device 20 or so as to overlap the cooling device 20 in a plan view.

As shown in FIG. 5, the housing 51 includes an opening 51a configured to receive the charger 60. The housing 51 is oriented with the opening 51a facing diagonally upward.

That is to say, the housing 51 includes an opening 51a configured to receive the charger 60 and is oriented with the opening 51a facing diagonally upward.

A shown in FIGS. 4 and 5, an output unit 49 is disposed on a front side portion of the travel battery 4. The output unit 49 is arranged adjacent to the left side of the input unit 48. The output unit 49 is electrically connected to an inverter 14 via an output harness 54.

The electric power from the travel battery 4 is supplied to the inverter 14 via the output unit 49 and the output harness 54.

### First Drain Hole and Second Drain Hole

As shown in FIG. 5, the housing 51 includes a cylindrical portion 51b extending diagonally downward to the left. A first drain hole 61 is formed in a lower portion of the housing 51. The first drain hole 61 is located at a position lower than a lower end position P1 of the opening 51a.

The first drain hole 61 is a hole extending from an inlet port 61a to an outlet port 61b. The inlet port 61a is located at the lower end portion of the space in the housing 51 in which the charger 60 is received. The outlet port 61b is located at the lower end portion of the cylindrical portion 51b. That is to say, a portion of the first drain hole 61 passes through the cylindrical portion 51b. The outlet port 61b is located at a position lower than the inlet port 61a.

With this configuration, when water enters the space in the housing 51 in which the charger 60 is received, the water enters the first drain hole 61 from the inlet port 61a due to gravity. Thereafter, the water moves downward through the first drain hole 61 due to gravity and is discharged downward from the outlet port 61b.

As shown in FIGS. 5 and 6, a second drain hole 45a is formed in the support member 45. As shown in FIG. 6, the second drain hole 45a overlaps the housing 51 in a plan view. The second drain hole 45a is located between the cooling device 20 and the oil cooler 24 in a plan view.

With this configuration, water discharged downward from the outlet port 61b falls onto the support member 45. The water that has fallen on the support member 45 is easily evaporated by the heat from the radiator 25 and the air from the cooling fan 26. Even if the water that has fallen on the support member 45 does not evaporate, it is likely to be drained downward by gravity from the second drain hole 45a.

Note that the tractor according to the present embodiment is configured so that there is no member directly below the second drain hole 45a. Therefore, the water discharged downward from the second drain hole 45a falls to the ground.

With the configuration described above, even if water enters the housing 51, the water is discharged to the outside of the housing 51 by gravity from the first drain hole 61 in the lower portion of the housing 51. This makes it difficult for water to accumulate inside the housing 51. This will likely eliminate the need to remove water from the housing 51 prior to connecting the charger 60. Therefore, the labor required to operate the tractor can be reduced.

Thus, the configuration described above can realize a tractor capable of reducing the labor required to operate the tractor.

### First Modification

The cylindrical portion 51b is provided in the above-described embodiment. A portion of the first drain hole 61 passes through the cylindrical portion 51b.

However, the present invention is not limited to such a configuration. Hereinafter, a first modification of the present invention will be described, focusing on the points that are different from the above embodiment. The configurations of components other than those described below are the same as in the above embodiment. The same reference signs are used for the same components as in the above embodiment.

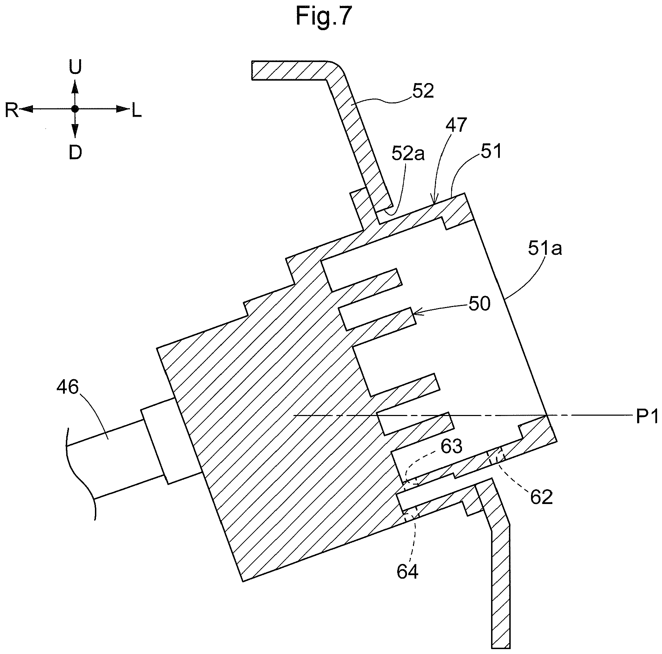

As shown in FIG. 7, the cylindrical portion 51b is not provided in the first modification. Instead of the first drain hole 61, at least one of a third drain hole 62, a fourth drain hole 63, and a fifth drain hole 64 is provided. In FIG. 7, the third drain hole 62, the fourth drain hole 63, and the fifth drain hole 64 are indicated by imaginary lines.

Note that only one, only two, or all of the third drain hole 62, the fourth drain hole 63, and the fifth drain hole 64 may be provided.

The third drain hole 62, the fourth drain hole 63, and the fifth drain hole 64 are all formed in the lower portion of the housing 51 and are located at positions lower than the lower end position P1 of the opening 51a. The third drain hole 62, the fourth drain hole 63, and the fifth drain hole 64 all correspond to the "first drain hole" according to the present invention.

The third drain hole 62 is located near the opening 51a in the lower portion of the housing 51. The fourth drain hole 63 is located in the lower portion of the housing 51 at a position that is in communication with the lower end portion of the space in which the charger 60 is received. The fifth drain hole 64 is located below the fourth drain hole 63. If the fourth drain hole 63 and the fifth drain hole 64 are provided, water discharged downward through the fourth drain hole 63 is further discharged downward through the fifth drain hole 64.

Even with such a configuration, for example, if the housing 51 and the cooling device 20 are arranged so that the water discharged through the third drain hole 62 or the fifth drain hole 64 falls to a position near the cooling device 20, the water falling on the support member 45 is easily evaporated by the heat from the radiator 25 and the air from the cooling fan 26. In addition, if the second drain hole 45a overlaps the housing 51 in a plan view, the water falling on the support member 45 through the third drain hole 62 or the fifth drain hole 64, even if it does not evaporate, is easily discharged downward through the second drain hole 45a by gravity.

### Other Embodiments

(1) The second drain hole 45a need not be formed in the support member 45.
(2) The second drain hole 45a need not overlap the housing 51 in a plan view.
(3) The housing 51 need not be disposed so as to be adjacent to the cooling device 20 or so as to overlap the cooling device 20 in a plan view.
(4) The opening 51a need not face diagonally upward.
(5) The first drain hole 61 may be located at a position higher than the lower end position P1 of the opening 51a.

Note that the configurations disclosed in the above embodiments (including the modification, the same applies hereinafter) are applicable in combination with the configurations disclosed in the other embodiments as long as no contradiction occurs. In addition, the embodiments disclosed in this specification are illustrative, and the embodiments of the present invention are not limited thereto, and can be modified as appropriate without departing from the purpose of the present invention.

### Industrial Applicability

The present invention is applicable not only to tractors but also to various electric work vehicles such as combines, rice transplanters, and construction machines.

### Description of Reference Signs

4: Travel Battery (Battery)
10: Front Wheel (Travel Device)
11: Rear Wheel (Travel Device)
20: Cooling Device
25: Radiator
26: Cooling Fan
45: Support Member
45a: Second Drain Hole
47: Connector
50: Connection Terminal
51: Housing
51a: Opening
60: Charger
61: First Drain Hole
62: Third Drain Hole (First Drain Hole)
63: Fourth Drain Hole (First Drain Hole)
64: Fifth Drain Hole (First Drain Hole)
M: Motor
P1: Lower End Position

## Claims

1. An electric work vehicle comprising:
a battery;
a motor configured to be driven by electric power supplied from the battery;
a travel device configured to be driven by the motor; and
a connector to which a charger is connectable and is electrically connected to the battery,
wherein the connector includes a connection terminal to which the charger is connectable and a housing that covers the connection terminal, and
the housing includes a first drain hole in a lower portion thereof.

2. The electric work vehicle according to claim 1, further comprising:
a support member disposed below the housing and supporting the housing,
wherein the support member includes a second drain hole, and
the second drain hole overlaps the housing in a plan view.

3. The electric work vehicle according to claim 1 or 2, further comprising:
a cooling device that includes a radiator and a cooling fan configured to cool the radiator,
wherein the housing is disposed so as to be adjacent to the cooling device or so as to overlap the cooling device in a plan view.

4. The electric work vehicle according to any one of claims 1 to 3,
wherein the housing includes an opening configured to receive the charger, and is oriented with the opening facing diagonally upward, and
the first drain hole is located at a position lower than a lower end position of the opening.
